# EUROPÄISCHE PATENTANMELDUNG

(11) **EP 2 554 424 A2**
(43) Veröffentlichungstag der Anmeldung: **06.02.2013**
(21) Anmeldenummer: 12179067.9
(22) Anmeldetag: 02.08.2012
(51) Int. Cl.: B60L 1/00, B60L 11/12

(54) **Elektrisches Versorgungssystem für ein Fahrzeug**

(30) Priorität: 04.08.2011 DE 102011080427
(71) Anmelder: S-Y SYSTEMS TECHNOLOGIES EUROPE GMBH, 93059 Regensburg (DE)
(72) Erfinder: Roderer, Götz, 93053 Regensburg (DE); Linke, Hans-Joachim, 93057 Regensburg (DE)
(74) Vertreter: Patentanwaltskanzlei WILHELM & BECK

(57) **Zusammenfassung**

Die vorliegende Erfindung betrifft ein System und ein Verfahren zum Betreiben einer elektrischen Versorgung von elektrischen Verbrauchern eines Fahrzeuges mit einem Verbrennungsmotor, wobei eine Batterie im Fahrzeug vorgesehen sind, wobei ein Anschluss vorgesehen ist, wobei die Batterie über den Anschluss von einer außerhalb des Fahrzeuges befindlichen Stromquelle aufladbar ist, wobei während einer ersten Betriebsphase des Fahrzeuges, in der ein Ladezustand der Batterie über einem Schwellwert liegt, die elektrischen Verbraucher des Fahrzeuges im wesentlichen von der Batterie versorgt werden, wobei bei Absinken des Ladezustands der Batterie unter den Schwellwert eine zweite Betriebsphase des Fahrzeuges beginnt, wobei in der zweiten Betriebsphase die Batterie vom Generator aufgeladen wird und/oder die elektrischen Verbraucher vom Generator mit Strom versorgt werden.

## Beschreibung

Die Erfindung betrifft ein Verfahren zum Betreiben einer elektrischen Versorgung von elektrischen Verbrauchern eines Fahrzeugs mit einem Verbrennungsmotor gemäß Patentanspruch 1 und ein elektrisches Versorgungssystem zum elektrischen Versorgen von elektrischen Verbrauchern eines Fahrzeugs mit Verbrennungsmotor gemäß Patentanspruch 9.

Im Stand der Technik sind verschiedene Verfahren zum Betreiben von elektrischen Verbrauchern eines Fahrzeugs bekannt. Beispielsweise ist es bekannt, dass ein Generator eines Fahrzeugs eine Batterie des Fahrzeugs auflädt und damit elektrische Verbraucher, wie z.B. elektrische Antriebe, Steuergeräte oder elektrische Beleuchtungen, mit Strom versorgt werden.

Weiterhin ist es bekannt, in Form eines Hybridantriebs ein Fahrzeug mit einem Verbrennungsmotor und einem Elektromotor bereitzustellen, wobei der Elektromotor von der Batterie mit Strom versorgt wird, wobei die Batterie vom Generator des Fahrzeugs aufgeladen wird. Zudem ist auch ein rein elektrischer Antrieb für ein Fahrzeug bekannt, bei dem die elektrischen Verbraucher des Fahrzeugs und der elektrische Antrieb mit Hilfe einer elektrischen Batterie mit Strom versorgt werden. Die Batterie wird über eine externe Stromquelle aufgeladen.

Bei diesen Ansätzen wird wie bei einem reinen Elektrofahrzeug zusätzlich zum Generator und zur Batterie ein Elektromotor benötigt. Der Generator muss darüber hinaus ebenso wie die Batterie eine erhöhte Kapazität aufweisen.

Weiterhin ist eine Lösung bekannt, bei der Bremsenergie des Fahrzeugs zurück gewonnen wird und in elektrische Energie umgewandelt wird.

Die Aufgabe der Erfindung besteht darin, einen neuen Ansatz für die Versorgung der elektrischen Verbraucher eines Fahrzeugs vorzusehen. Eine grundsätzliche Idee der Erfindung besteht darin, dass die elektrischen Verbraucher des Fahrzeugs weitestgehend unabhängig vom Generator mit Strom versorgt werden. Dies wird insbesondere dadurch erreicht, dass die elektrischen Verbraucher des Fahrzeugs im Wesentlichen von der Batterie mit Strom versorgt werden, so lange es der Ladezustand der Batterie zulässt. Weiterhin wird die Batterie soweit als möglich über eine externe oder interne Stromquelle aufgeladen. Dazu kann ein Ladegerät außerhalb oder im Fahrzeug vorgesehen sein. Sinkt der Ladezustand der Batterie unter einen Schwellwert, so werden die elektrischen Verbraucher vom Generator des Fahrzeugs mit Strom versorgt und/oder die Batterie vom Generator aufgeladen. Eine interne Stromquelle kann beispielsweise eine Solarzelle und/oder ein Thermoelement sein.

Eine Grundidee besteht darin, dass die Batterie ihre Energie soweit als möglich über eine Ladevorrichtung von einer externen Stromversorgung bezieht. Die Ladevorrichtung kann beispielsweise in Form einer Steckdose oder einer induktiven Kopplung vorgesehen sein. Auf diese Weise ist eine Aufladung der Batterie ohne Wandlerverluste möglich. Zudem kann die Batterie des Fahrzeugs nach dem Anschließen an die externe Stromversorgung als elektrischer Puffer für ein Mikrokraftwerk dienen. So lange der Ladezustand der Batterie im Betrieb des Fahrzeugs sich in einem vordefinierten oder dynamisch definierten Bereich befinden, wird auf die Bereitstellung von elektrischer Energie durch den Verbrennungsmotor über den Generator verzichtet, d.h. die Versorgung mit elektrischem Strom erfolgt zunächst ohne weitere Wandelverluste aus der geladenen Batterie.

Versuche haben gezeigt, dass mit einer üblichen Batterie eines Fahrzeugs auf diese Weise bei Fahrstrecken von bis zu 60 km oder einer Betriebszeit von einer Stunde keine elektrische Energie vom Verbrennungsmotor über den Generator bereitgestellt werden muss. Somit ist dieser Ansatz der Energieversorgung auf Kurzstrecken und insbesondere im urbanen Umfeld von besonderem Interesse. Auf Kurzstrecken dürfte sich somit eine Kraftstoffeinsparung von 5% erreichen lassen. Weiterhin hat der neue Ansatz den Vorteil, dass ein schneller Übergang von bereits in Serie befindlichen Fahrzeugen mit geringen Zusatzkosten und geringem Entwicklungsrisiko auf das neue Konzept möglich ist. Zudem erfordert der neue Ansatz ein Minimum an neuen Komponenten (Kosten, Gewicht, Integration) und ein Minimum der Veränderungen am bestehenden Konzept.

Weiterhin können für die Bereitstellung der elektrischen Energie über das Aufladen der Batterie insbesondere regenerative Energiequellen wie Photovoltaik und Windenergie besser nutzbar gemacht werden, insbesondere in der Auslegung als Mikro-Kraftwerk. Diese Systeme speisen heute ins öffentliche Netz ein, wobei die Einspeisung jedoch Schwankungen im Bedarf unterliegt und die erzeugten Energiemengen zwischengespeichert oder bei Fehlen eines Speichers die Energieerzeugung eingestellt werden muss. Das Aufladen der Batterie kann beispielsweise in den Phasen einer geringen Nachfrage nach Strom im öffentlichen Netz erfolgen, wie beispielsweise nachts bei der Verwendung von Windkraftwerken. Zudem bietet die vorgeschlagene Lösung reduzierte Wandlerverluste, da die im Kraftstoff enthaltene chemische Energie nicht zuerst in eine mechanische Energie und dann in eine elektrische Energie mit Hilfe des Generators umgewandelt werden muss.

Zu diesem Zweck erfolgt eine Aufladung der Batterie vor dem Start des Fahrzeugs nicht durch den Generator des Fahrzeugs, sondern durch externe Energiequellen. Der Begriff Batterie deckt dabei jede Art von aufladbarem Speicher für elektrische Energie, sowie auch mögliche Kombinationen von unterschiedlichen Speichern für elektrische Energie ab, wie z.B. eine normale Batterie (Akkumulator) für die Versorgung des elektrischen Bordnetzes des Fahrzeugs sowie eine zweite Batterie (Akkumulator) für Start bzw. Start-Stopp-Betrieb des Verbrennungsmotors oder z.B. einen oder mehrere ebenfalls aufgeladene Kondensatoren (super cap). Für die Beurteilung des Ladezustands können die aktuelle Ladung (SOC) der Batterie im Vergleich zur Maximalladung und/oder die aktuelle Maximalladung (SOH) berücksichtigt werden.

Solange der Ladezustand, insbesondere die prozentuale Maximalladung und/oder die aktuelle Maximalladung über vorgegebenen oder dynamisch definierten Grenzwerten liegen, wird auf eine Bereitstellung von elektrischer Energie durch den Verbrennungsmotor über den Generator verzichtet. Abhängig von der gewählten Ausführungsform könnten einzelne elektrische Verbraucher auch während der ersten Betriebsphase vom Generator mit Strom versorgt werden. Ziel ist es jedoch, die wesentliche Menge an elektrischer Energie über die Batterie bereitzustellen.

Erst bei Unterschreiten des oder der Grenzwerte für den Ladezustand der Batterie wird der Generator dazu verwendet, um die elektrische Energie für das elektrische Bordnetz des Fahrzeugs und für ein elektrisches Aufladen der Batterie bereitzustellen.

In einer weiteren Ausführungsform wird in der ersten Betriebsphase des Fahrzeugs die Batterie nicht von dem Generator des Fahrzeugs aufgeladen.

In einer weiteren Ausführungsform werden in der ersten Betriebsphase die elektrischen Verbraucher des Fahrzeugs nur von der Batterie versorgt. Dadurch wird eine effiziente Ausnutzung der elektrischen Energie über die Batterie ermöglicht.

In einer weiteren Ausführungsform wird der Ladezustand der Batterie durch eine gemessene Ladespannung und/oder einen gemessenen Ladestrom abgeschätzt. Dadurch ist eine einfache Abschätzung des Ladezustands der Batterie möglich.

In einer weiteren Ausführungsform werden für die Durchführung eines automatischen Start/Stopp-Verfahrens zum Betreiben des Verbrennungsmotors eine zweite Batterie, beispielsweise Kondensatoren eingesetzt, die die elektrische Leistung zum Betreiben des Startermotors zum Starten eines Verbrennungsmotors bereitstellen. Die Kondensatoren werden vorzugsweise ebenfalls vor dem Start des Fahrzeugs über die externe Stromquelle aufgeladen.

In einer weiteren Ausführungsform wird der Schwellwert für den Ladezustand der Batterie an ein Fahrszenario angepasst. Dazu kann beispielsweise berücksichtigt werden, ob sich das Fahrzeug auf einem Weg zu einer Ladestation befindet und somit der Weg bis zum nächsten externen Aufladen kürzer als eine vorgegebene Strecke ist. Somit kann bei einem Abstand des Fahrzeugs, der kleiner als die vorgegebene Strecke ist, der Schwellwert für den Ladezustand gesenkt werden, bis zu dem die Batterie entladen werden darf, bevor der Generator des Verbrennungsmotors zur elektrischen Versorgung der elektrischen Verbraucher und/oder zur Aufladung der Batterie verwendet wird.

In einer weiteren Ausführungsform wird bei Erreichen einer Ladegrenze der Batterie eine Ladeempfehlung im Fahrzeug angezeigt oder akustisch ausgegeben. Somit erhält der Fahrer den Hinweis, dass die Batterie über das externe Versorgungsnetz aufgeladen werden sollte. Die Ladegrenze kann größer oder gleich dem Schwellwert für den Ladezustand sein.

Zudem können weitere kraftstoffsparende Mittel, wie z.B. eine intelligente Routenerkennung, ein kraftstoffsparendes Powermanagement oder eine Energierückgewinnung und Aufladung der Batterie während einer Bremsung des Fahrzeugs verwendet werden. Beispielsweise könnte in einer Bremsphase eine zusätzliche Starterbatterie zum Antreiben des Starters des Verbrennungsmotors für Start/Stopp-Betrieb aufgeladen werden.

Die beschriebene Vorrichtung und das beschriebene Verfahren führen zu einer Reduktion des Spritverbrauchs, da kein zusätzlicher elektrischer Antrieb zur Ausnutzung einer elektrischen Energie vorgesehen ist. Daher werden gegenüber einem Hybridfahrzeug oder einem Elektrofahrzeug mechanischen und steuerungstechnische Integrationen in das Fahrzeug, d.h. Kosten und Gewicht, eingespart. Zudem sind aufgrund der externen Aufladung der Batterie elektrische Wandlerverluste reduziert. Weiterhin ist die Notwendigkeit zu einem Hochspannungsversorgungsnetz im Fahrzeug und der entsprechenden Verkabelung/Absicherung (z.B. Lichtbogenüberwachung) nicht gegeben. Zudem ist eine Änderung des Generators nicht erforderlich. Eine Markteinführung des beschriebenen Systems kann auf allen heutigen Plattformen schnell durchgeführt werden. Bei der Verwendung von 220 V Wechselspannung als Ladespannung für die externe Aufladung der Batterie kann eine rasche Marktdurchdringung erreicht werden. Eine Umwandlung des 220 V Wechselstrom zu 14 V Gleichstrom oder einer anderen Spannung kann im Fahrzeug oder an einer externen Ladestation durchgeführt werden. Zudem kann das Fahrzeug als elektrische Batterie für eine Pufferwirkung von Betreibern von Mikrokraftwerken eingesetzt werden.

Mit dem beschriebenen System wird zu geringeren Kosten und bei geringem technischem Aufwand eine Alternative zu Hybridfahrzeugen bereitgestellt. Das beschriebene elektrische Versorgungssystem zum Versorgen von elektrischen Verbrauchern eines Fahrzeugs mit einem Verbrennungsmotor weist eine Batterie auf, wobei die Batterie mit Hilfe einer außerhalb des Fahrzeugs befindlichen Stromquelle aufladbar ist. Das Versorgungssystem umfasst ein Steuergerät, das ausgebildet ist, um während einer ersten Betriebsphase des Fahrzeugs, in der ein Ladezustand der Batterie über einem Schwellwert liegt, eine elektrische Versorgung der elektrischen Verbraucher im Wesentlichen über die Batterie festzulegen. Zudem wird bei Absinken des Ladezustands der Batterie unter den Schwellwert eine zweite Betriebsphase des Fahrzeugs begonnen, wobei in der zweiten Betriebsphase das Steuergerät ausgebildet ist, um die Batterie vom Generator aufladen zu lassen und/oder die elektrischen Verbraucher des Fahrzeugs vom Generator mit Strom zu versorgen.

Abhängig von der gewählten Ausführungsform kann ein Ladegerät im Fahrzeug angeordnet sein.

Vorzugsweise ist der Anschluss als induktives Koppelelement zur Übertragung von elektrischer Leistung ausgebildet.

Die Erfindung wird im Folgenden anhand der Figuren näher erläutert. Es zeigen:
Figur 1 eine schematische Darstellung eines Fahrzeugs; und
Figur 2 eine schematische Darstellung eines Ablaufverfahrens.

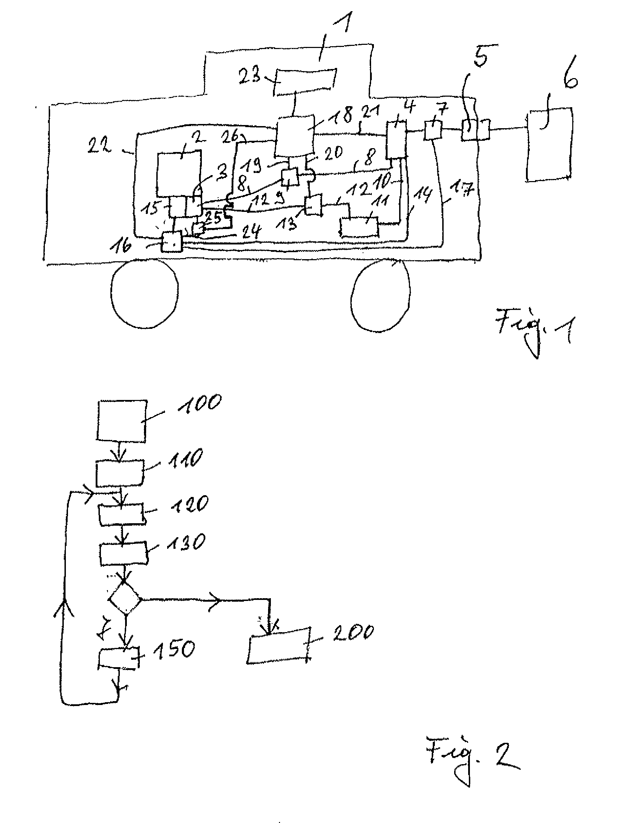

Figur 1 zeigt in einer schematischen Darstellung ein Fahrzeug 1 mit einem Verbrennungsmotor 2, der einen Generator 3 antreibt. Weiterhin ist eine Batterie 4 vorgesehen, die mit einem elektrischen Anschluss 5 verbunden ist. Anstelle der Batterie 4 können auch andere Arten von elektrischen Energiespeichern wie z.B. Kondensatoren vorgesehen sein. Der elektrische Anschluss 5 kann in Form eines Steckers ausgebildet sein, an den eine externe Stromquelle 6 angeschlossen werden kann. Abhängig von der gewählten Ausführungsform kann die Batterie 4 über elektrische Leitungen direkt oder über ein Ladegerät 7 mit dem Anschluss 5 verbunden sein. Bei der Ausführungsform, bei der die Batterie 4 direkt mit dem elektrischen Anschluss 5 verbunden ist, ist das Ladegerät 7 außerhalb des Fahrzeugs 1 angeordnet.

Die Batterie 4 steht über eine erste elektrische Leitung 8 und einen ersten Schalter 9 mit dem Generator 3 in Verbindung. Weiterhin steht die Batterie 4 über zweite elektrische Leitungen 10 mit elektrischen Verbrauchern 11 des Fahrzeugs 1 in Verbindung. Die elektrischen Verbraucher 11 sind in Form eines Blocks dargestellt, wobei die elektrischen Verbraucher 11 über ein Bordnetz des Fahrzeugs von der Batterie 4 mit Strom versorgt werden. Somit stellt der Block in der Figur 1 das elektrische Bordnetz des Fahrzeugs dar, an dem verschiedene elektrische Verbraucher wie z.B. Motoren, Schalter, Relais, Steuergeräte und/oder Leuchtmittel angeschlossen sind. Weiterhin ist der Generator 3 über eine dritte elektrische Leitung 12 und einen zweiten Schalter 13 mit den elektrischen Verbrauchern 11, insbesondere mit dem Bordnetz des Fahrzeugs 1, verbunden. In einer weiteren Ausführungsform ist die Batterie 4 über eine vierte elektrische Leitung 14 mit einem Startermotor 15 verbunden. Abhängig von der gewählten Ausführungsform kann die vierte elektrische Leitung 14 mit einer zweiten Batterie 16 verbunden sein, die wiederum mit dem Startermotor 15 in Verbindung steht. Anstelle der zweiten Batterie 16 können auch Kondensatoren, wie z.B. sogenannte Superkondensatoren, vorgesehen sein. Zudem können die zweite Batterie 16 oder die Kondensatoren über eine fünfte elektrische Leitung 17 mit dem Anschluss 5 oder, bei Vorhandensein des Ladegeräts 7, mit dem Ladegerät 7 verbunden sein. Zudem kann der Generator 3 über eine sechste elektrische Leitung 24 und einem dritten Schalter 25 mit der zweiten Batterie verbunden sein. Abhängig vom Leitungszustand des dritten Schalters 25 lädt der Generator 3 die zweite Batterie 16 auf oder nicht.

Das Fahrzeug 1 verfügt weiterhin über ein Steuergerät 18, das über eine erste Steuerleitung 19 mit dem ersten Schalter 9, über eine zweite Steuerleitung 20 mit dem zweiten Schalter 13 und über eine dritte Steuerleitung 26 mit dem dritten Schalter 25 verbunden ist. Zudem ist das Steuergerät 18 über eine Sensorleitung 21 mit der Batterie 4 und über eine zweite Sensorleitung 22 mit der zweiten Batterie 16 verbunden. Mit Hilfe der Sensorleitung 21 erfasst das Steuergerät 18 den Ladezustand der Batterie 4. Über die zweite Sensorleitung 22 erfasst das Steuergerät 18 den Ladezustand der zweiten Batterie 16. Abhängig von dem Öffnungs- bzw. Schließzustand des ersten Schalters 1 versorgt der Generator 3 die Batterie 4 mit Strom und lädt diese auf. Abhängig von dem Schalt- bzw. Öffnungszustand des zweiten Schalters 13 versorgt der Generator 3 die elektrischen Verbraucher 11 bzw. das Bordnetz des Fahrzeugs mit Strom. Abhängig von der gewählten Ausführungsform können der Starter 15 und der Generator 3 auch in Form eines Startergenerators ausgebildet sein. Der Starter 15 dient zum Starten des Verbrennungsmotors 2. Der Generator 3 wird vom Verbrennungsmotor 2 angetrieben und dient zur Erzeugung von Strom.

Abhängig von der gewählten Ausführungsform ist das Steuergerät 18 mit einer Ausgabe 23 verbunden, über die Informationen über den Ladezustand der Batterie 4 und/oder der zweiten Batterie 16 angezeigt bzw. akustisch ausgegeben werden können.

Weiterhin kann das Steuergerät 18 mit einem Navigationsgerät verbunden sein, das dem Steuergerät Informationen über die zu fahrende Route zu einem Ziel und insbesondere Informationen über die Entfernung bis zu einem Ziel bzw. bis zu einem Ladestandort mit einer externen Stromquelle gibt. Der Ladestandort kann beispielsweise zu Hause am Wohnort des Fahrers sein.

Figur 2 zeigt einen schematischen Ablauf zum Betreiben des Fahrzeugs 1. Bei Programmpunkt 100 startet der Programmablauf. Beim folgenden Programmpunkt 110 werden die Batterie 4 und/oder die zweite Batterie 16 über den elektrischen Anschluss 5 mit Hilfe einer externen Stromquelle 6 aufgeladen. Dazu kann das Ladegerät 7 im Fahrzeug oder außerhalb des Fahrzeugs angeordnet sein. Zudem kann die Energieübertragung zwischen dem Fahrzeug 1 und der externen Stromversorgung 6 auch berührungslos mit Hilfe einer induktiven Energieübertragung stattfinden. Beim folgenden Programmpunkt 120 wird das Fahrzeug gestartet, d.h. der Verbrennungsmotor 2 wird mit Hilfe des Startermotors 15 in Betrieb gesetzt, wobei der erste, der zweite und der dritte Schalter 9, 13, 25 geöffnet sind. Der Verbrennungsmotor 2 wird beispielsweise von dem Steuergerät 18 oder von einem weiteren Steuergerät betrieben. In einem folgenden Programmpunkt 130 überprüft das Steuergerät 18 den Ladezustand der Batterie 4 mit Hilfe der Sensorleitung 21. Bei einem folgenden Programmpunkt 140 vergleicht das Steuergerät 18 den aktuellen Ladezustand der Batterie 4 mit einem Schwellwert. Der Schwellwert ist in einem Speicher des Steuergeräts 18 abgelegt. Ergibt der Vergleich bei Programmpunkt 140, dass der Ladezustand der Batterie 4 über dem ersten Schwellwert liegt, so bleiben der erste und der zweite Schalter 9, 13 geöffnet. Somit werden die elektrischen Verbraucher des Fahrzeugs, d.h. das elektrische Bordnetz des Fahrzeugs von der Batterie 4 mit Strom versorgt. Zudem wird vorzugsweise eine Start-Stop-Automatik des Verbrennungsmotors 2 nur von der Batterie 4 mit Strom versorgt. Dies stellt eine erste Betriebsphase des Fahrzeugs dar, der im Programmpunkt 150 dargestellt ist.

In diesem Zustand kann der Generator 3 dazu verwendet werden, um beispielsweise kleinere Verbraucher, insbesondere elektrische Stellglieder des Verbrennungsmotors 2, beispielsweise Einspritzventile, mit Strom zu versorgen. Für die Einleitung in kleine und große elektrische Verbraucher kann ein Grenzwert abgelegt sein, der auch einstellbar sein kann. Abhängig von der Ausführungsform kann der Generator 3 in der ersten Betriebsphase keine elektrischen Verbraucher und keine Batterie mit Strom versorgen. Das Bordnetz jedoch, das wesentliche elektrische Verbraucher des Fahrzeugs 1 umfasst, wird im ersten Betriebszustand nur von der Batterie 4 mit Strom versorgt. Somit werden im ersten Betriebszustand die elektrischen Verbraucher 11 mit Strom dem versorgt, der von der externen Stromquelle 6 in die Batterie 4 geladen wurde.

Nach dem Programmpunkt 150 wird zum Programmpunkt 120 zurück verzweigt. Der Programmablauf 110 bis 140 wird so oft durchlaufen, bis der Ladezustand der Batterie 4 unter den Schwellwert sinkt. Dies wird bei der Abfrage 140 vom Steuergerät 18 erkannt, und es wird zum Programmpunkt 200 verzweigt. Beim Programmpunkt 200, der eine zweite Betriebsphase des Fahrzeugs darstellt, werden vom Steuergerät 18 der erste und der zweite Schalter 9, 13 in eine Schließstellung gebracht, so dass der Generator 3 sowohl die Batterie 4 auflädt als auch die elektrischen Verbraucher 11 mit Strom versorgt. Abhängig von der gewählten Ausführungsform kann das Steuergerät 18 in der zweiten Betriebsphase auch nur einen der zwei Schalter 9, 13 schließen. Zudem wird vom Steuergerät 18 auch der dritte Schalter 24 leitend geschaltet. Anschließend wird zu Programmpunkt 110 zurück verzweigt. Weiterhin kann beispielsweise in der zweiten Betriebsphase eine Start/Stopp Automatik des Vertrennungsmotors 2 ausgeschaltet werden.

Abhängig von der gewählten Ausführungsform kann das Steuergerät 18 den Schwellwert für den Ladezustand der Batterie 4, über dem die erste Betriebsphase und unter dem die zweite Betriebsphase vorliegt, abhängig von weiteren Parametern anpassen. Beispielsweise kann bei der Ermittlung des Schwellwerts eine aktuelle maximale Ladung der Batterie, die vom Alter der Batterie abhängt, berücksichtigt werden. Zudem kann der Schwellwert abhängig von Informationen eines Navigationsgeräts erhöht oder abgesenkt werden. Beispielsweise kann der Schwellwert abgesenkt werden, wenn sich das Fahrzeug auf dem Weg zur nächsten Ladestation befindet und die Entfernung unter einem vorgegebenen Grenzwert liegt. Somit kann im Wissen, dass der nächste Ladevorgang nur eine bestimmte Fahrstrecke entfernt liegt, eine tiefere Entladung der Batterie 4 als vorgegeben in Kauf genommen werden.

In einer weiteren Ausführungsform kann der Ladezustand der Batterie abhängig von einer Ladespannung und von einem Ladestrom abgeschätzt werden.

In einer weiteren Ausführungsform kann die Batterie 4 beim Parken des Fahrzeuges nicht nur von externen Energiequellen, sondern auch von internen Stromquellen, wie z. B. von einem im Fahrzeug integrierten Solardach mit Solarzellen und/oder einem Thermoelement, das zwischen Fahrzeuginnen- und Außenraum wirkt, geladen werden.

Weiterhin kann die Batterie 4 in allen Betriebsphasen während des Bremsens des Fahrzeugs über eine entsprechende Kopplung des Generators 3 aufgeladen werden.

### Bezugszeichenliste

- 1: Fahrzeug
- 2: Verbrennungsmotor
- 3: Generator
- 4: Batterie
- 5: Anschluss
- 6: Stromquelle
- 7: Ladegerät
- 8: erste elektrische Leitung
- 9: erster Schalter
- 10: zweite elektrische Leitung
- 11: elektrischer Verbraucher
- 12: dritte elektrische Leitung
- 13: zweiter Schalter
- 14: vierte elektrische Leitung
- 15: Startermotor
- 16: zweite Batterie
- 17: fünfte elektrische Leitung
- 18: Steuergerät
- 19: erste Steuerleitung
- 20: zweite Steuerleitung
- 21: Sensorleitung
- 22: zweite Sensorleitung
- 23: Ausgabe
- 24: sechste elektrische Leitung
- 25: dritter Schalter
- 26: dritte Steuerleitung

## Patentansprüche

1. Verfahren zum Betreiben einer elektrischen Versorgung von elektrischen Verbrauchern eines Fahrzeuges mit einem Verbrennungsmotor, wobei eine Batterie im Fahrzeug vorgesehen sind, wobei ein Anschluss vorgesehen ist, wobei die Batterie über den Anschluss von einer außerhalb des Fahrzeuges befindlichen Stromquelle aufladbar ist, wobei während einer ersten Betriebsphase des Fahrzeuges, in der ein Ladezustand der Batterie über einem Schwellwert liegt, die elektrischen Verbraucher des Fahrzeuges im wesentlichen von der Batterie versorgt werden, wobei bei Absinken des Ladezustands der Batterie unter den Schwellwert eine zweite Betriebsphase des Fahrzeuges beginnt, wobei in der zweiten Betriebsphase die Batterie vom Generator aufgeladen wird und/oder die elektrischen Verbraucher vom Generator mit Strom versorgt werden.

2. Verfahren nach Anspruch 1, wobei in der ersten Betriebsphase des Fahrzeuges die Batterie nicht von dem Generator des Fahrzeuges aufgeladen wird.

3. Verfahren nach Anspruch 1 oder 2, wobei in der ersten Betriebsphase die elektrischen Verbraucher des Fahrzeuges nur von der Batterie versorgt werden.

4. Verfahren nach einem der Ansprüche 1 bis 3, wobei der Ladezustand der Batterie durch eine Ladespannung und/oder einen Ladestrom abgeschätzt wird.

5. Verfahren nach einem der Ansprüche 1 bis 4, wobei für ein automatisches Start/Stopp-Verfahren zum Betreiben des Verbrennungsmotors eine zweite Batterie vorgesehen ist, die die elektrische Leistung zum Betreiben eines Startermotors zum Starten des Verbrennungsmotors bereitstellen.

6. Verfahren nach einem der Ansprüche 1 bis 5, wobei der Schwellwert für den Ladezustand an ein Fahrszenario angepasst wird.

7. Verfahren nach Anspruch 6, wobei der Schwellwert unter Verwendung von Routendaten einer zu erwartenden Fahrroute angepasst wird.

8. Verfahren nach einem der Ansprüche 1 bis 7, wobei bei Erreichen einer Ladegrenze eine Ladeempfehlung für die Batterie, insbesondere unter Berücksichtigung einer Fahrstrecke zu einer Ladestation angezeigt oder akustisch ausgegeben wird.

9. Elektrisches Versorgungssystem zum elektrischen Versorgen von elektrischen Verbrauchern (11) eines Fahrzeugs (1) mit einem Verbrennungsmotor (2), wobei eine Batterie (4) und ein Anschluss (5) vorgesehen sind, wobei die Batterie (4) mit dem Anschluss (5) verbunden ist, wobei mithilfe des Anschlusses (5) die Batterie (4) von einer außerhalb des Fahrzeugs (1) befindlichen Stromquelle (6) aufladbar ist, wobei ein Steuergerät (18) vorgesehen ist, wobei das Steuergerät (18) ausgebildet ist, um während einer ersten Betriebsphase des Fahrzeugs (1), in der ein Ladezustand der Batterie (4) über einem Schwellwert liegt, eine elektrische Versorgung der elektrischen Verbraucher (11) im Wesentlichen über die Batterie festzulegen, wobei bei Absinken des Ladezustands der Batterie (4) unter den Schwellwert eine zweite Betriebsphase des Fahrzeuges beginnt, wobei in der zweiten Betriebsphase das Steuergerät (18) ausgebildet ist, um die Batterie (4) vom Generator (3) aufladen zu lassen und/oder die elektrischen Verbraucher (11) vom Generator mit Strom versorgen zu lassen.

10. Versorgungssystem nach Anspruch 9, wobei das Steuergerät (18) ausgebildet ist, um in der ersten Betriebsphase des Fahrzeuges die Batterie (4) nicht von dem Generator (3) des Fahrzeugs (1) aufladen zu lassen.
